# EUROPÄISCHE PATENTSCHRIFT

(11) **EP 2 829 764 B1**
(45) Veröffentlichungstag und Bekanntmachung des Hinweises auf die Patenterteilung: **04.05.2016**
(21) Anmeldenummer: 13177459.8
(22) Anmeldetag: 22.07.2013
(51) Int. Cl.: F16D 67/04, F16D 55/40, F16D 121/12

(54) **Kombinierte Kupplungs- und Bremsvorrichtung**
Combined clutch and brake device
Dispositif d'embrayage et de freinage combiné

(43) Veröffentlichungstag der Anmeldung: 28.01.2015
(73) Patentinhaber: Ortlinghaus-Werke GmbH, 42929 Wermelskirchen (DE)
(72) Erfinder: Seeger, Herbert, 32547 Bad Oeynhausen (DE)
(74) Vertreter: Stenger Watzke Ring

(56) Entgegenhaltungen:
- EP-A1- 1 635 082
- EP-B1- 2 090 800
- DE-C2- 2 938 394
- US-A- 4 186 827

## Beschreibung

Die Erfindung betrifft eine kombinierte Kupplungs- und Bremsvorrichtung für eine Bearbeitungsmaschine, mit einer Reibkupplung und einer ersten Reibbremse, wobei die Reibkupplung und die erste Reibbremse an ein gemeinsames hydraulisches Betätigungssystem angeschlossen sind, und mit einer zweiten Reibbremse, die an ein weiteres hydraulisches Betätigungssystem angeschlossen ist.

Eine Kupplungs- und Bremsvorrichtung der gattungsgemäßen Art ist aus der DE 25 49 714 B1 bekannt. Diese verfügt über eine Reibkupplung und eine erste Reibbremse. Dabei sind die Reibkupplung und die erste Reibbremse hydraulisch miteinander gekoppelt, so dass sich im Betätigungsfall die Reibkupplung bei gleichzeitiger Öffnung der Reibbremse schließt und umgekehrt. Zur Betätigung dient ein hydraulisch arbeitendes Betätigungssystem, das eine Zylinder-Kolben-Anordnung bereitstellt. Dabei steht der Kolben in Richtung auf die Reibbremse unter Federvorspannung, so dass bei ausbleibender oder mangelnder Druckbeaufschlagung die gesamte Anordnung in Bremsstellung gehalten ist. Sobald eine hinreichende Druckbeaufschlagung der Zylinder-Kolben-Anordnung erfolgt, entlüftet die Reibbremse entgegen der auf sie einwirkenden Federkraft, was gleichzeitig zu einem Schließen der Reibkupplung führt.

Die vorbekannte Kupplungs- und Bremsvorrichtung ist als sogenannte Doppelbremsvorrichtung ausgebildet und verfügt über eine Hilfsbremse. Diese ist als zweite Reibbremse in identischer Weise zur ersten Reibbremse ausgebildet. Zur Betätigung der zweiten Reibbremse ist ein ebenfalls über eine Zylinder-Kolben-Anordnung verfügendes Betätigungssystem vorgesehen. Der Kolben der Zylinder-Kolben-Anordnung steht unter Federvorspannung, und zwar in Richtung auf die zweite Reibbremse, so dass diese bei mangelnder Druckbeaufschlagung geschlossen ist. Im Falle der Druckbeaufschlagung erfolgt eine Bremsenentlüftung entgegen der auf sie einwirkenden Federkraft mit der Folge, dass eine Öffnung stattfindet.

Gemäß der vorbekannten Konstruktion sind das erste und das zweite Betätigungssystem miteinander gekoppelt. Bei einer Betätigung der ersten Reibbremse findet mithin auch eine Betätigung der zweiten Reibbremse statt, womit in vorteilhafter Weise eine Redundanz und damit eine Sicherheitserhöhung erreicht ist.

Eine zur vorgenannten Konstruktion vergleichbare Konstruktion ist aus der EP 2 090 800 B1 bekannt geworden. Gemäß dieser Konstruktion kommen auch zwei Reibbremsen zum Einsatz, deren Betätigungssysteme hydraulisch miteinander gekoppelt sind. Dabei dient die zweite Reibbremse als sogenannte Hochhalteeinrichtung, die in Kombination mit der ersten Reibbremse ein Feststellen ermöglicht. Entscheidend aber auch nach der Konstruktion gemäß der EP 2 090 800 B1 ist in Übereinstimmung mit der DE 25 49 714 B1, dass im Betätigungsfall eine gleichzeitige hydraulische Betätigung der ersten Reibbremse einerseits und der als Hochhalteeinrichtung dienenden zweiten Reibbremse andererseits erfolgt. Mögliche Einstellungen unterschiedlicher Schaltzeitpunkte können mittels zwischengeschalteter Drosselventile und/oder der geometrischen Abmessungen der in Kombination mit den Reibbremsen zum Einsatz kommenden Zylinder-Kolben-Anordnungen realisiert werden.

Eine Weiterentwicklung der vorbeschriebenen Konstruktion ist aus der DE 29 38 394 C2 bekannt geworden. Gemäß dieser Konstruktion findet eine solche Hintereinanderordnung von Reibkupplung, erster Reibbremse und zweiter Reibbremse statt, dass im Unterschied zur vorbeschriebenen Konstruktion anstelle von zwei nur noch eine Rückstellfeder benötigt wird. Aber auch gemäß dieser Konstruktion kommen zur hydraulischen Betätigung miteinander gekoppelte Betätigungssysteme zum Einsatz, so dass im Betriebsfall eine gleichzeitige Betätigung von erster und zweiter Reibbremse stattfindet.

Obgleich sich die vorbeschriebene Konstruktion im alltäglichen Praxiseinsatz bewährt hat, besteht Verbesserungsbedarf, insbesondere mit Blick auf erweiterte Einstellmöglichkeiten im Betätigungsfall. Es ist deshalb die **Aufgabe** der Erfindung, eine gattungsgemäße Vorrichtung dahingehend weiterzuentwickeln, dass verwenderseitig Betätigungsparameter eingestellt und an individuelle Anwendungsfälle angepasst werden können.

Zur **Lösung** dieser Aufgabe wird mit der Erfindung eine kombinierte Kupplungs- und Bremsvorrichtung der eingangs genannten Art vorgeschlagen, die sich dadurch auszeichnet, dass die beiden Betätigungssysteme hydraulisch voneinander entkoppelt sind, wobei die zweite Reibbremse als Hochhalteeinrichtung der Aufnahme statischer Lastmomente dient.

In Abkehr zur bisherigen Bauweise wird mit der Erfindung vorgeschlagen, die zur Betätigung von Reibkupplung, erster Reibbremse und zweiter Reibbremse vorgesehenen Betätigungssysteme hydraulisch voneinander zu entkoppeln. Eine Ansteuerung der ersten Reibbremse führt mithin nicht mehr automatisch auch zu einer Ansteuerung der zweiten Reibbremse. Es ist vielmehr gestattet, die Reibbremsen voneinander unabhängig anzusteuern, womit es erstmals möglich wird, die erste Reibbremse ohne Unterstützung der zweiten Reibbremse als dynamische Bremse einzusetzen, das heißt als Bremse zur Aufnahme dynamischer Lastmomente zum Zwecke des Stillsetzens. Die zweite Reibbremse kann indes als Hochhalteeinrichtung zur Aufnahme ausschließlich statischer Lastmomente genutzt werden, wird also erst dann geschaltet, wenn eine Maschinenstillsetzung mittels der ersten Reibbremse erfolgt ist. Die zweite Reibbremse dient insofern als echte Hochhalteeinrichtung, die selbst im Falle des Ausfalls der ersten Reibbremse ein Halten der festgesetzten Maschine sicherstellt. Dabei erfolgt dank der erfindungsgemäßen Ausgestaltung eine voneinander separierte Ansteuerung von erster und zweiter Reibbremse, was in vorteilhafter Weise die Möglichkeit eröffnet, die jeweilige Ansteuerung in optimierter Weise auszuführen. Dies gestattet es auch, individuelle Einstellungen beziehungsweise nachträgliche Systemveränderungen vorzunehmen, was bei aus dem Stand der Technik bekannten Konstruktionen nicht gestattet ist. Mit der Erfindung wird insofern in Abkehr zu bisherigen Bremssystemen ein Zweifach-Bremssystem vorgeschlagen, demgemäß nicht mehr konstruktionsbedingt eine gleichzeitige Ansteuerung beider Reibbremsen erfolgt. Nach der erfindungsgemäßen Konstruktion kann vielmehr wahlweise eine gleichzeitige, eine zeitlich etwas versetzte oder eine zeitlich hintereinandergeschaltete Betätigung der beiden Reibbremsen stattfinden.

Verfahrensseitig wird in diesem Zusammenhang zur Lösung der vorstehenden Aufgabe vorgeschlagen ein Verfahren zum Betrieb einer erfindungsgemäßen Vorrichtung, bei dem zur Überführung aus einer entkuppelten in eine gekuppelte Stellung zunächst das weitere Betätigungssystem druckbeaufschlagt und die zweite Reibbremse vollständig geöffnet und alsdann das erste Betätigungssystem druckbeaufschlagt und bei gleichzeitigem Öffnen der ersten Reibbremse die Reibkupplung geschlossen wird.

Gemäß dieser Verfahrensdurchführung erfolgt eine Einkupplung, das heißt eine Überführung der Vorrichtung aus einer entkuppelten in eine gekuppelte Stellung. Zu diesem Zweck wird in einem ersten Verfahrensschritt zunächst das weitere Betätigungssystem druckbeaufschlagt. Infolgedessen wird die als Hochhalteeinrichtung dienende zweite Reibbremse vollständig geöffnet. Sobald dies geschehen ist, wird in einem zweiten Verfahrensschritt das erste Betätigungssystem druckbeaufschlagt, infolgedessen es bei einem gleichzeitigen Öffnen der ersten Reibbremse zu einem Schließen der Reibkupplung kommt. Im Ergebnis stellt sich der verkuppelte und ungebremste Zustand der Vorrichtung ein.

Mit der Erfindung wird ferner ein Verfahren zum Betrieb einer vorbeschriebenen Vorrichtung vorgeschlagen, bei dem zur Überführung aus einer gekuppelten in eine entkuppelte Stellung zunächst das erste Betätigungssystem drucklos gestellt und bei gleichzeitigem Öffnen der Reibkupplung die erste Reibbremse vollständig geschlossen und alsdann das weitere Betätigungssystem drucklos gestellt und die zweite Reibbremse geschlossen wird.

Gemäß dieser Verfahrensdurchführung wird die erfindungsgemäßen Vorrichtung entkuppelt, das heißt aus einer gekuppelten in eine entkuppelte Stellung überführt. Zu diesem Zweck wird in einem ersten Verfahrensschritt das erste Betätigungssystem drucklos gestellt. In der Konsequenz öffnet die Reibkupplung, und zwar bei gleichzeitigem Schließen der ersten Reibbremse. Es kommt so zu einem Stillsetzen der Maschine. Sobald die erste Reibbremse vollständig geschlossen und die Maschine stillgesetzt ist, wird in einem nächsten Verfahrensschritt das weitere Betätigungssystem drucklos gestellt. Dies führt zu einem Schließen der zweiten Reibbremse, und zwar aufgrund der mit der zweiten Reibbremse zusammenwirkenden Feder. Die zweite Reibbremse dient als Sicherheitseinrichtung dem Hochhalten der stillgesetzten Maschine, und zwar auch bei einem Ausfall der ersten Reibbremse:

Gemäß einem weiteren Merkmal der Erfindung ist vorgesehen, dass die beiden Betätigungssysteme jeweils an eine eigene Hydraulikversorgung angeschlossen sind. Dabei verfügt jede Hydraulikversorgung über eine Hydraulikpumpe und ein Reservoir für Hydraulikflüssigkeit. In einer Abwandlung der Erfindung kann für die beiden Betätigungssysteme auch ein gemeinsames Reservoir für Hydraulikflüssigkeit vorgesehen sein. Von erfindungswesentlicher Bedeutung ist, allein dass eine voneinander unabhängige, das heißt voneinander separate Ansteuerung der beiden Betätigungssysteme ermöglicht ist.

Die beiden Betätigungssysteme weisen gemäß einem weiteren Merkmal der Erfindung jeweils einen Kolben und eine damit zusammenwirkende Feder auf. Dabei sorgt die je Betätigungssystem vorgesehene Feder dafür, dass die zugehörige Reibbremse in Verschlussstellung gehalten ist, bei einer Drucklosstellung des Kolbens also stets die Bremsstellung gehalten ist. Nur im Falle der Druckbeaufschlagung verfährt der Kolben entgegen der auf ihn einwirkenden Federkraft, was zu einer entsprechenden Freischaltung der zugehörigen Reibbremse führt.

Gemäß einem weiteren Merkmal der Erfindung ist vorgesehen, dass die Reibkupplung und die erste Reibbremse einen gemeinsamen Kolben aufweisen, der federkraftbelastet auf die Reibbremse einwirkt. Diese Konstruktion erweist sich in ihrem Aufbau als kompakt und stellt zudem konstruktiv sicher, dass eine gleichzeitige Betätigung von Reibkupplung einerseits und erster Reibbremse andererseits stattfindet.

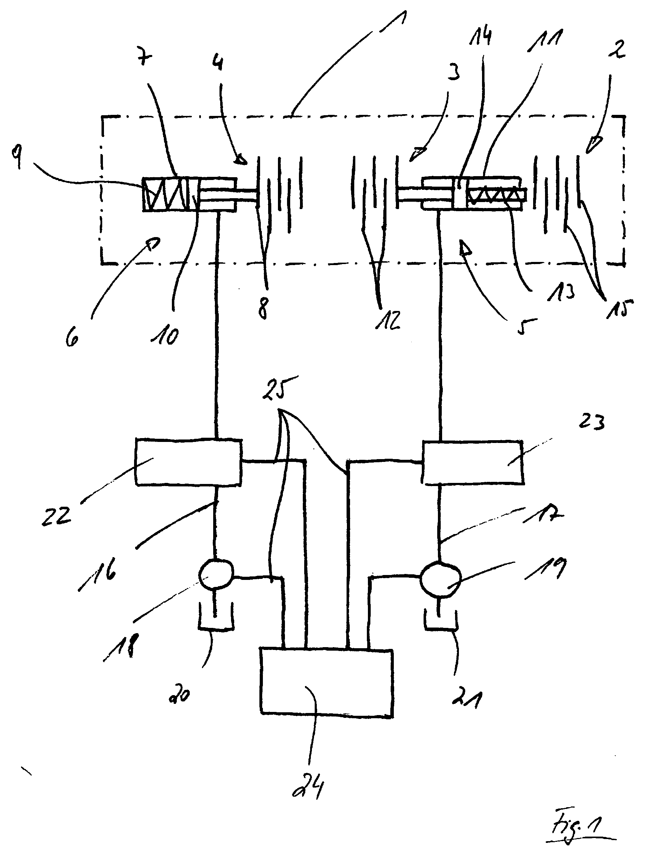

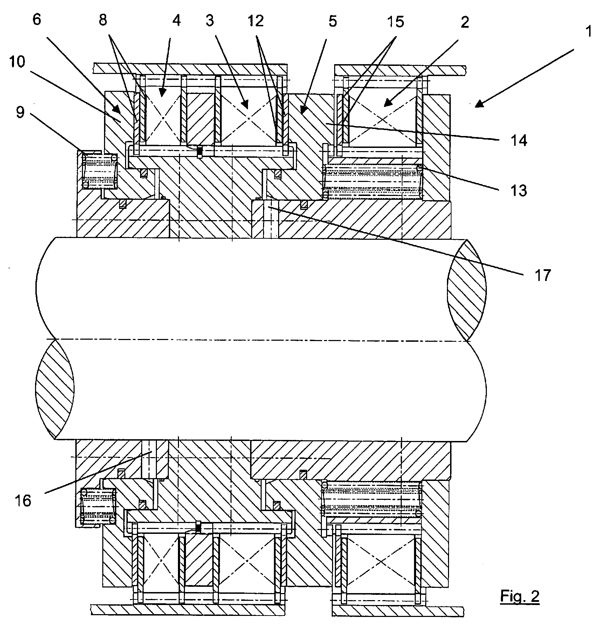

Weitere Merkmale und Vorteile der Erfindung ergeben sich aus der nachfolgenden Beschreibung anhand der Figuren 1 und 2. Dabei zeigen die Figuren in Figur 1 eine schematische und in Figur 2 eine konkretisierte Darstellung der erfindungsgemäßen Vorrichtung.

Die Figuren lassen eine kombinierte Kupplungs- und Bremsvorrichtung 1 für eine Bearbeitungsmaschine erkennen. Die erfindungsgemäße Vorrichtung verfügt über eine Reibkupplung 2 und eine erste Reibbremse 3. Diese verfügen jeweils über Reibscheiben 12 beziehungsweise 15, die in an sich bekannter Weise axial verschieblich angeordnet sind. Zur Betätigung der Reibkupplung 2 und der ersten Reibbremse 3 ist ein gemeinsames hydraulisches Betätigungssystem 5 vorgesehen, dass über eine Zylinder-Kolben-Anordnung 11 verfügt. Diese Anordnung stellt einen in einem Zylinder axial verschieblich gelagerten Kolben 14 bereit, der mittels einer ersten Kolbenstange auf die Reibscheiben 12 der ersten Reibbremse 3 und mit einer zweiten Kolbenstange auf die Reibscheiben 15 der Reibkupplung 2 einwirkt. Im drucklosen Zustand des ersten Betätigungssystems 5 wirkt der Kolben 14 federkraftbelastet auf die erste Reibbremse 3 ein, zu welchem Zweck die Feder 13 vorgesehen ist. Die Kolbenstange und der Kolben 14 können auch als ein einstückiges Bauteil ausgebildet sein, wie dies Fig. 2 zeigt.

Das erste Betätigungssystem 5 verfügt ferner über eine Hydraulikpumpe 19, die mittels einer Hydraulikleitung 17 unter Zwischenschaltung eines Ventils 23 an die Zylinder-Kolben-Anordnung 11 angeschlossen ist und letztere mit einem Reservoir 21 für Hydraulikflüssigkeit strömungstechnisch verbindet.

Die Kupplungs- und Bremsvorrichtung 1 verfügt desweiteren über eine zweite Reibbremse 4. Diese weist Reibscheiben 8 auf, die mit einer Zylinder-Kolben-Anordnung 7 eines zweiten Betätigungssystems 6 zusammenwirken. Dabei verfügt die Zylinder-Kolben-Anordnung 7 über einen axial in einem Zylinder geführten Kolben 10, der unter Zwischenordnung einer Feder 9 auf die Reibscheiben 8 der zweiten Reibbremse 4 einwirkt. Auch diesbezüglich kann vorgesehen sein, Kolbenstange und Kolben 10 einstückig auszubilden, wie dies in Fig. 2 dargestellt ist.

Die Zylinder-Kolben-Anordnung 7 ist unter Zwischenschaltung eines Ventils 22 mittels einer Hydraulikleitung 16 an eine Pumpe 18 angeschlossen, die ihrerseits in strömungstechnische Verbindung mit einem Reservoir 20 für Hydraulikflüssigkeit, beispielsweise Öl, steht.

Von erfindungswesentlicher Bedeutung ist, dass die beiden Betätigungssysteme 5 und 6 strömungstechnisch voneinander entkoppelt sind, mithin eine separate Ansteuerung der Zylinder-Kolben-Anordnungen 7 und 11 stattfinden kann.

Zum Zwecke der Ansteuerung der beiden Bestätigungssysteme 5 und 6 ist eine Steuereinrichtung 24 vorgesehen, die mittels entsprechender Steuerleitungen 25 mit den Ventilen 22 und 23 beziehungsweise den Pumpen 18 und 19 in kommunikationstechnischer Verbindung steht.

Die Funktionsweise der erfindungsgemäßen Vorrichtung 1, das heißt eine erfindungsgemäße Verfahrensdurchführung ergibt sich wie folgt:
Die Fign. 1 und 2 zeigen die erfindungsgemäße Vorrichtung 1 in stillgesetzter, das heißt gebremster Stellung. Die beiden Zylinder-Kolben-Anordnungen 7 und 11 sind drucklos gestellt, so dass die Kolben 10 und 14 auf die Reibscheiben 8 und 12 der zugehörigen Reibbremsen 3 und 4 federkraftbelastet einwirken. Zur Überführung der Vorrichtung 1 aus der entkuppelten, das heißt gebremsten, in die gekuppelte Stellung wird zunächst das zweite Betätigungssystem 6 druckbeaufschlagt. Infolgedessen wird die zweite Reibbremse 4 entgegen der durch die Feder 9 bewirkten Federkraft entlüftet und der Kolben 10 verfährt mit Bezug auf die Zeichnungsebene nach Fig. 1 in seine die zweite Reibbremse 4 entlastende Stellung nach links. Sobald die zweite Reibbremse 4 vollständig geöffnet ist, wird alsdann das erste Betätigungssystem 5 druckbeaufschlagt, infolgedessen der Kolben 14 mit Bezug auf die Zeichnungsebene nach Fig. 1 entgegen der durch die Feder 13 bewirkten Federkraft nach rechts verfahren wird. Infolgedessen kommt es zu einer Entlüftung der ersten Reibbremse 3 bei gleichzeitigem Schließen der Reibkupplung 2. Sobald der Kolben 14 vollständig verfahren ist, ist die Reibbremse 3 geöffnet und die Reibkupplung 2 geschlossen, womit die gekuppelte Stellung erreicht ist.

Zur Überprüfung der Vorrichtung 1 aus der gekuppelten in die entkuppelte Stellung wird in umgekehrter Reihenfolge zunächst das erste Betätigungssystem 5 und alsdann das zweite Betätigungssystem drucklos gestellt. Infolgedessen verfährt zunächst der Kolben 14 aufgrund der auf ihn einwirkenden Feder 13 zurück in seine in Fig. 1 gezeigte Ausgangsstellung, in der die Reibkupplung 2 geöffnet und die erste Reibbremse 3 geschlossen ist. Sobald diese Stellung des Kolbens 14 erreicht ist, findet eine Drucklosstellung des zweiten Betätigungssystem 6 statt, indem dieses drucklos gestellt wird, was ein Verfahren des Kolbens 10 mit Bezug auf die Zeichnungsebene nach Fig. 1 nach rechts zur Folge hat, was zu einem Schließen der zweiten Reibbremse 4 führt.

Die erfindungsgemäße Besonderheit besteht darin, dass das erste und das zweite Betätigungssystem 5 und 6 strömungstechnisch voneinander entkoppelt sind. Dies gestattet eine getrennte Ansteuerung der ersten und der zweiten Reibbremse 3, 4, wobei für eine Optimierung des Verfahrensablaufs eine Steuerung 24 vorgesehen ist, die nach individuellen Vorgaben eine Steuerung der zu den jeweiligen Betätigungssystemen 5 und 6 gehörenden Ventile 22 beziehungsweise 23 und/oder Pumpen 18 beziehungsweise 19 vornehmen kann.

### Bezugszeichenliste

- 1: Vorrichtung
- 2: Reibkupplung
- 3: erste Reibbremse
- 4: zweite Reibbremse
- 5: erstes Betätigungssystem
- 6: zweites Betätigungssystem
- 7: Zylinder-Kolben-Anordnung
- 8: Reibscheibe
- 9: Feder
- 10: Kolben
- 11: Zylinder-Kolben-Anordnung
- 12: Reibscheibe
- 13: Feder
- 14: Kolben
- 15: Reibscheibe
- 16: Hydraulikleitung
- 17: Hydraulikleitung
- 18: Pumpe
- 19: Pumpe
- 20: Reservoir
- 21: Reservoir
- 22: Ventil
- 23: Ventil
- 24: Steuereinrichtung
- 25: Steuerleitung

## Patentansprüche

1. Kombinierte Kupplungs- und Bremsvorrichtung für eine Bearbeitungsmaschine, mit einer Reibkupplung (2) und einer ersten Reibbremse (3), wobei die Reibkupplung (2) und die erste Reibbremse (3) an ein gemeinsames hydraulisches Betätigungssystem (5) angeschlossen sind, und mit einer zweiten Reibbremse (4), die an ein weiteres hydraulisches Betätigungssystem (6) angeschlossen ist,
**dadurch gekennzeichnet,**
**dass** die beiden Betätigungssysteme (5, 6) hydraulisch von einander entkoppelt sind, wobei die zweite Reibbremse (4) als Hochhalteeinrichtung der Aufnahme statischer Lastmomente dient.

2. Vorrichtung nach Anspruch 1, **dadurch gekennzeichnet, dass** die beiden Betätigungssysteme (5, 6) jeweils an eine eigene Hydraulikversorgung angeschlossen sind.

3. Vorrichtung nach Anspruch 1 oder 2, **dadurch gekennzeichnet, dass** die beiden Betätigungssysteme (5, 6) jeweils einen Kolben (10, 14) und eine damit zusammenwirkende Feder (9, 13) aufweisen.

4. Vorrichtung nach einem der vorhergehenden Ansprüche, **dadurch gekennzeichnet, dass** die Reibkupplung (2) und die erste Reibbremse (3) einen gemeinsamen Kolben (14) aufweisen, der federkraftbelastet auf die Reibbremse (3) wirkt.

5. Verfahren zum Betrieb einer kombinierten Kupplungs- und Bremsvorrichtung für eine Bearbeitungsmaschine nach einem der vorhergehenden Ansprüche, bei dem zur Überführung aus einer entkuppelten in eine gekuppelte Stellung zunächst das weitere Betätigungssystem (6) druckbeaufschlagt und die zweite Reibbremse (4) vollständig geöffnet und alsdann das erste Betätigungssystem (5) druckbeaufschlagt und bei gleichzeitigem Öffnen der ersten Reibbremse (3) die Reibkupplung (2) geschlossen wird.

6. Verfahren zum Betrieb einer kombinierten Kupplungs- und Bremsvorrichtung für eine Bearbeitungsmaschine nach einem der vorhergehenden Ansprüche 1 bis 4, bei dem zur Überprüfung aus einer gekuppelten in eine entkuppelte Stellung zunächst das erste Betätigungssystem (5) drucklos gestellt und bei gleichzeitigem Öffnen der Reibkupplung (2) die erste Reibbremse (3) vollständig geschlossen und alsdann das zweite Betätigungssystem (6) drucklos gestellt und die zweite Reibbremse (4) geschlossen wird.

## Claims

1. A combined coupling and brake device for a processing machine, comprising a friction coupling (2) and a first friction brake (3), wherein the friction coupling (2) and the first friction brake (3) are connected to a common hydraulic actuation system (5), and comprising a second friction brake (4) which is connected to another hydraulic actuation system (6).
**characterized in that**
the two actuation systems (5, 6) are hydraulically decoupled from each other, wherein the second friction brake (4), in its function as restraint device, serves to receive static load torques.

2. A device according to claim 1, **characterized in that** the two actuation systems (5, 6) are each connected to their own hydraulic supply.

3. A device according to claim 1 or 2, **characterized in that** the two actuation systems (5, 6) each comprise a piston (10, 14) and a spring (9, 13) that cooperates therewith.

4. A device according to one of the preceding claims, **characterized in that** the friction coupling (2) and the first friction brake (3) comprise a common piston (14) that acts upon the friction brake (3) in a spring loaded manner.

5. A method for operating a combined coupling and brake device for a processing machine according to one of the preceding claims, in which, for converting a decoupled condition into a coupled condition, at first pressure is applied to the other actuation system (6) and the second friction brake (4) is completely opened and then pressure is applied to the first actuation system (5) and the friction coupling (2) is closed while the first friction brake (3) is simultaneously opened.

6. A method for operating a combined coupling and brake device for a processing machine according to one of the preceding claims 1 through 4, in which, for converting a coupled condition into a decoupled condition, at first the first actuation system (5) is depressurized and the first friction brake (3) is completely closed while the friction coupling (2) is simultaneously opened and then the second actuation system (6) is depressurized and the second friction brake (4) is closed.

## Revendications

1. Dispositif d'embrayage et de freinage combiné pour une machine d'usinage, comprenant un embrayage à friction (2) et un premier frein à friction (3), l'embrayage à friction (2) et le premier frein à friction (3) étant raccordés à un système d'actionnement hydraulique commun (5), et comprenant un deuxième frein à friction (4) qui est raccordé à un autre système d'actionnement hydraulique (6),
**caractérisé en ce**
**que** les deux systèmes d'actionnement (5, 6) sont hydrauliquement découplés l'un de l'autre, le deuxième frein à friction (4) servant, en tant que dispositif d'immobilisation au point mort haut, à recevoir des moments de charge statiques.

2. Dispositif selon la revendication 1, **caractérisé en ce que** les deux systèmes d'actionnement (5, 6) sont chacun raccordés à leur propre alimentation hydraulique.

3. Dispositif selon la revendication 1 ou la revendication 2, **caractérisé en ce que** les deux systèmes d'actionnement (5, 6) comprennent chacun un piston (10, 14) et un ressort (9, 13) coopérant avec celui-ci.

4. Dispositif selon l'une des revendications précédentes, **caractérisé en ce que** l'embrayage à friction (2) et le premier frein à friction (3) comprennent un piston commun (14), qui agit sur le frein à friction (3) de manière chargée par ressort.

5. Procédé de fonctionnement d'un dispositif d'embrayage et de freinage combiné pour une machine d'usinage selon l'une des revendications précédentes, dans lequel, pour le transfert d'une position découplée à une position couplée, on applique d'abord de la pression à l'autre système d'actionnement (6) et on ouvre complètement le deuxième frein à friction (4) et on applique ensuite de la pression au premier système d'actionnement (5) et on ferme l'embrayage à friction (2) en ouvrant simultanément le premier frein à friction (3).

6. Procédé de fonctionnement d'un dispositif d'embrayage et de freinage combiné pour une machine d'usinage selon l'une des revendications 1 à 4, dans lequel, pour le transfert d'une position couplée à une position découplée, on dépressurise d'abord le premier système d'actionnement (5) et on ferme complètement le premier frein à friction (3) en ouvrant simultanément l'embrayage à friction (2) et ensuite on dépressurise le deuxième système d'actionnement (6) et on ferme le deuxième frein à friction (4).
